# FASCICULE DE BREVET EUROPEEN

(11) **EP 0 430 009 B1**
(45) Date de publication et mention de la délivrance du brevet: **31.08.1994**
(21) Numéro de dépôt: 90122071.5
(22) Date de dépôt: 19.11.1990
(51) Int. Cl.: H02J 9/06

(54) **Ensemble d'alimentation électrique d'une pompe à vide à paliers magnétiques, avec alimentation auxiliaire des paliers en cas de coupure du courant du secteur**
Vorrichtung zur Stromversorgung einer mit magnetischen Drucklagern versehenen Vakuumpumpe mit einer Notstromversorgung für die Drucklager im Falle eines Stromausfalles im Netz
Power supply unit for a vacuum pump with magnetic thrust bearings and with an auxiliary power supply for the thrust bearings in case of a power failure

(30) Priorité: 23.11.1989 FR 8915412
(43) Date de publication de la demande: 05.06.1991
(73) Titulaire: ALCATEL CIT, 75008 Paris (FR)
(72) Inventeur: Pierrejean, Didier, F-74320 Sevrier (FR)
(74) Mandataire: Weinmiller, Jürgen

(56) Documents cités:
- DE-A- 3 836 563
- FR-A- 2 206 035
- GB-A- 2 011 658
- GB-A- 2 117 144

## Description

La présente invention concerne un ensemble d'alimentation électrique pour une pompe à vide dont le rotor est monté sur paliers magnétiques et entraîné en rotation par un moteur électrique du type à rotor comportant des pôles magnétiques, par exemple à aimants permanents.

Dans un système connu de ce genre, les enroulements statoriques du moteur d'entraînement de la pompe sont alimentés par l'intermédiaire d'un convertisseur statique continu-alternatif lui-même alimenté, côté continu, par le secteur par l'intermédiaire d'une alimentation. De même, les paliers magnétiques de la pompe sont alimentés par un ensemble d'alimentation et de commande alimenté également par le secteur. Cet ensemble d'alimentation et de commande des paliers magnétiques est également utilisé pour la charge d'une batterie de secours qui permet, en cas de coupure du secteur, l'alimentation des paliers et d'éviter ainsi une chute brutale du rotor sur ses paliers à billes de secours. Cependant, comme la batterie a une capacité limitée et la pompe une très faible décroissance de sa vitesse de rotation, une durée de 30 à 60 minutes pouvant s'écouler entre la coupure de courant et l'arrêt de la rotation, on réalise un freinage du moteur de la pompe en commutant les enroulements statoriques du moteur vers des résistances de charge.

Un tel procédé présente des inconvénients :
- En cas de freinage rapide et avec un rotor d'inertie importante, la puissance dissipée par les résistances est très grande et provoque un échauffement important du boîtier de commande risquant de perturber le fonctionnement des circuits électroniques.
- Le freinage est rapide au départ et lent à la fin de sorte qu'en cas de coupures répétées, la batterie peut se trouver déchargée avant l'arrêt du moteur.

L'invention a pour but de pallier ces inconvénients, et a pour objet un système d'alimentation électrique d'une pompe à vide comportant un rotor supporté par des paliers magnétiques et entraîné en rotation par un moteur électrique dont le rotor, solidaire du rotor de la pompe, est du type comportant des pôles magnétiques, le stator du moteur électrique d'entraînement ainsi que les paliers magnétiques étant alimentés par le secteur, par l'intermédiaire de circuits électroniques d'alimentation et de commande, caractérisé en ce qu'il comporte en outre `un circuit d'alimentation auxiliaire dont la sortie est reliée au circuit d'alimentation desdits paliers magnétiques et qui reçoit en entrée son énergie d'alimentation, par l'intermédiaire d'un interrupteur se fermant automatiquement en cas de coupure du secteur, dudit moteur d'entraînement fonctionnant en alternateur.

Selon une réalisation particulière, lesdits circuits électroniques d'alimentation et de commande du stator du moteur électrique d'entraînement de la pompe comportent un convertisseur statique continualternatif, ladite alimentation auxiliaire ayant sa dite entrée reliée audit convertisseur du côté courant continu.

Selon une autre caractéristique de l'invention, une batterie de secours, chargée par le circuit d'alimentation des paliers est reliée par l'intermédiaire d'un interrupteur de secours à une entrée d'alimentation de secours de ce circuit d'alimentation, ledit interrupteur de secours comprenant des moyens de maintien en position ouverte tant que le secteur n'est pas coupé ou tant que la tension de sortie de ladite alimentation auxiliaire est supérieure à la tension de ladite batterie.

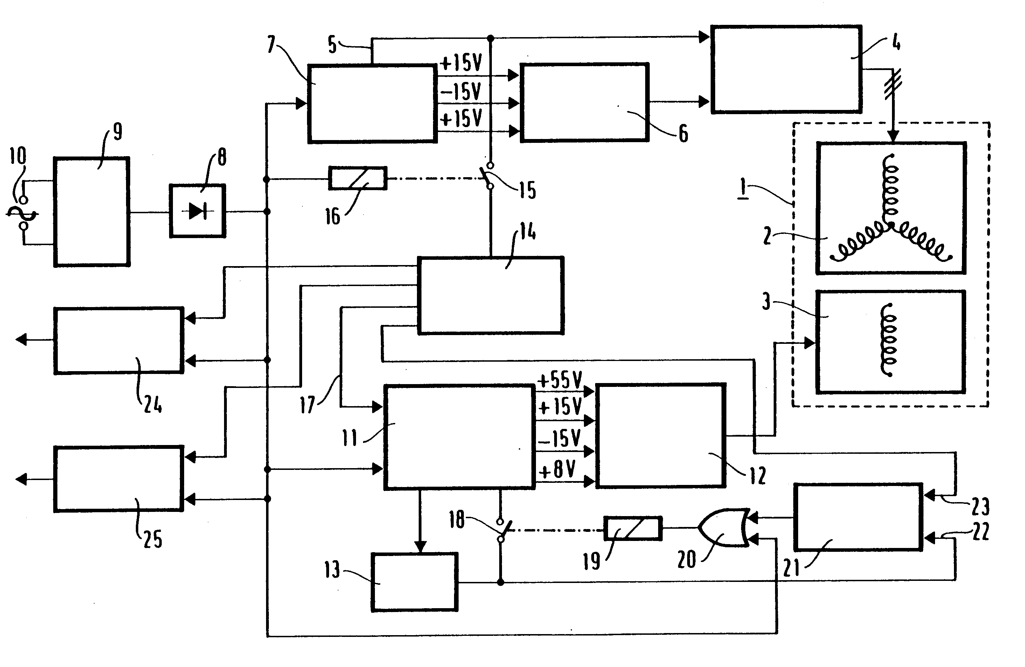

On va maintenant donner la description d'un exemple de mise en oeuvre de l'invention en se référant au dessin annexé comportant une figure unique.

La figure représente, en schéma-bloc, l'alimentation électrique selon l'invention d'une pompe turbomoléculaire 1. La référence 2 désigne le bobinage statorique du moteur électrique d'entraînement de la pompe et la référence 3 désigne les paliers magnétiques de la pompe. L'ensemble tournant, non figuré, comprend le rotor du moteur électrique entraînement et la partie rotorique de la pompe elle-même, ces deux parties forment un unique équipage mobile à l'intérieur d'un stator commun de moteur et de pompe. Le rotor du moteur d'entraînement est du type comportant des pôles magnétiques constitués par exemple par des aimants permanents et le moteur fonctionne donc comme un moteur synchrone et il est alimenté par un convertisseur statique continualternatif 4 constituant un pont triphasé alimenté du côté courant continu par une ligne 5 à une tension continue de 75 volts et dont la commande est réalisée par un circuit logique de commande 6 utilisant la technique de modulation par largeur d'impulsion (PWM) avec une fréquence de découpage de 20 k Hz.

La tension d'alimentation de la ligne 5, ainsi que l'alimentation de la logique de commande 6 sont fournies par un circuit électronique d'alimentation 7 relié à la sortie d'un circuit redresseur 8 lui-même relié à la sortie d'un transformateur d'alimentation 9 branché sur l'alimentation du secteur 10.

A la vitesse nominale de la pompe turbomoléculaire 1, le convertisseur 4 fournit une tension alternative à 400 Hz.

Les paliers magnétiques 3 sont également alimentés par le secteur 10 par l'intermédiaire du transformateur 9, du circuit redresseur 8, d'un circuit d'alimentation 11 et d'un circuit de commande 12 (PWM, fréquence de découpage 50 k Hz). Le circuit d'alimentation 11 charge une batterie de secours 13.

Le système comprend en outre une alimentation auxiliaire 14 dont la sortie est reliée à l'entrée du circuit d'alimentation 11 des paliers. Ce circuit d'alimentation auxiliaire 14 est relié en entrée à la ligne d'alimentation en puissance 5 (côté continu) du convertisseur 4. Un interrupteur 15, commandé par un relais 16 permet la connexion ou au contraire la déconnexion d'avec cette ligne 5. Lorsque le relais 16 est alimenté, l'interrupteur 15 est ouvert. En cas de panne du secteur, l'interrupteur 15 se ferme et la pompe 1 qui continue à tourner par son inertie fonctionne en alternateur qui fournit ainsi du courant continu sur la ligne 5 et donc à l'alimentation auxiliaire 14 dont une sortie 17 est reliée à l'alimentation 11. Ainsi, les paliers magnétiques 3 sont toujours alimentés. Le ralentissement du moteur est proportionnel à la puissance nécessaire au fonctionnement des paliers. Ce ralentissement est donc faible si les efforts appliqués aux paliers sont faibles et, d'autre part, si la pompe a atteint son vide limite, on peut conserver ce vide pendant un temps très long le moteur n'étant quasiment pas freiné.

La batterie de secours 13 n'est connectée à une entrée d'alimentation de secours du circuit d'alimentation 11, par l'intermédiaire d'un interrupteur de secours 18, que lorsque la tension de sortie de l'alimentation auxiliaire 14 devient inférieure à la tension de la batterie 13. A cet effet, l'interrupteur de secours 18 est commandé par un relais 19 alimenté par la sortie d'une porte logique "OU" 20 dont l'une des deux entrées est reliée à la sortie du redresseur 8 et l'autre à la sortie d'un comparateur 21 qui compare sur son entrée 22 la tension de la batterie 13 à la tension fournie par une sortie de l'alimentation auxiliaire 14, cette sortie étant reliée à l'autre entrée 23 du comparateur. Le comparateur 21 est un comparateur à seuil qui fournit un signal de sortie lorsque son entrée 23 reliée à l'alimentation auxiliaire 14 est à une tension supérieure à son entrée 22 reliée à la batterie 13. Lorsque la tension sur l'entrée 23 devient inférieure à celle de la batterie, le signal de sortie s'annule et si le secteur est toujours coupé, le relais 19 qui n'est alors plus alimenté provoque la fermeture de l'interrupteur 18. La batterie 13 assure alors l'alimentation en énergie nécessaire au fonctionnement des paliers 3.

L'alimentation auxiliaire 14, peut également alimenter en cas de panne du secteur d'autres modules normalement alimentés par le secteur. Sur la figure, on a ainsi représenté un module électronique 24 pour la gestion des organes de sécurité du circuit de vide et un module de commande de vannes 25.

## Revendications

1. Système d'alimentation électrique d'une pompe à vide (1) comportant un rotor supporté par des paliers magnétiques (3) et entraîné par un moteur électrique dont le rotor, solidaire du rotor de la pompe, est du type comportant des pôles magnétiques, le stator (2) du moteur électrique d'entraînement, ainsi que les paliers magnétiques (3) étant alimentés par le secteur (10), par l'intermédiaire de circuits électroniques d'alimentation (7, 11) et de commande (4, 6, 12), caractérisé en ce qu'il comporte en outre un circuit d'alimentation auxiliaire (14) dont la sortie est reliée au circuit d'alimentation desdits paliers magnétiques et qui reçoit en entrée son énergie d'alimentation, par l'intermédiaire d'un interrupteur (15) se fermant automatiquement en cas de coupure du secteur, dudit moteur d'entraînement fonctionnant en alternateur.

2. Système d'alimentation électrique d'une pompe à vide selon la revendication 1, caractérisé en ce que lesdits circuits électroniques d'alimentation et de commande du stator (2) du moteur électrique d'entraînement de la pompe comportent un convertisseur statique continu-alternatif (4), ladite alimentation auxiliaire (14) ayant sa dite entrée reliée audit convertisseur du côté courant continu.

3. Système d'alimentation électrique d'une pompe à vide selon l'une des revendications 1 ou 2, caractérisé en ce qu'une batterie de secours (13), chargée par le circuit d'alimentation (11) des paliers est reliée par l'intermédiaire d'un interrupteur de secours (18) à une entrée d'alimentation de secours de ce circuit d'alimentation, ledit interrupteur de secours (18) comprenant des moyens (19, 20, 21) de maintien en position ouverte tant que le secteur n'est pas coupé ou tant que la tension de sortie de ladite alimentation auxiliaire (14) est supérieure à la tension de ladite batterie (13).

4. Système d'alimentation électrique d'une pompe à vide selon l'une des revendications 1 à 3, caractérisé en ce qu'il comprend en outre différents autres modules fonctionnels (24, 25) normalement alimentés par le secteur et alimentés en cas de panne par ledit circuit d'alimentation auxiliaire.

## Patentansprüche

1. System zur elektrischen Speisung einer Vakuumpumpe (1) mit einem Rotor, der von Magnetlagern (3) getragen und von einem Elektromotor in Drehung versetzt wird, dessen mit dem Rotor der Pumpe verbundener Rotor Magnetpole aufweist, wobei der Stator (2) des elektrischen Antriebsmotors sowie die Magnetlager (3) über elektronische Speise- (7, 11) und Steuerkreise (4, 6, 12) aus dem Netz (10) gespeist werden, dadurch gekennzeichnet, daß es weiter einen Hilfsspeisekreis (14) aufweist, dessen Ausgang mit dem Speisekreis der Magnetlager verbunden ist und der am Eingang seine Speiseenergie über einen Schalter (15), der automatisch bei einem Netzausfall schließt, vom Antriebsmotor empfängt, der dann als Wechselstromgenerator arbeitet.

2. System zur elektrischen Speisung einer Vakuumpumpe nach Anspruch 1, dadurch gekennzeichnet, daß die elektronischen Speise- und Steuerkreise des Stators (2) des elektrischen Antriebsmotors der Pumpe einen statischen Gleichstrom-Wechselstrom-Wandler (4) aufweisen, wobei der Eingang der Hilfsspeisung (14) mit dem Wandler auf dessen Gleichstromseite verbunden ist.

3. System zur elektrischen Speisung einer Vakuumpumpe nach einem der Ansprüche 1 oder 2, dadurch gekennzeichnet, daß eine Notstrombatterie (13), die vom Lager-Speisekreis (11) geladen wird, über einen Notstromschalter (18) mit einem Notspeiseeingang dieses Speisekreises verbunden ist, wobei der Notstromschalter (18) Mittel (19, 20, 21) zur Beibehaltung der offenen Stellung aufweist, solange kein Netzausfall vorliegt oder solange die Ausgangsspannung der Hilfsspeisung (14) höher als die Spannung der Batterie (13) ist.

4. System zur elektrischen Speisung einer Vakuumpumpe nach einem der Ansprüche 1 bis 3, dadurch gekennzeichnet, daß es weiter verschiedene andere funktionelle Module (24, 25) aufweist, die normalerweise vom Netz und im Fall eines Stromausfalls vom Hilfsspeisekreis gespeist werden.

## Claims

1. An electrical power supply system for a vacuum pump (1) including a rotor supported by magnetic bearings (3) and driven by an electric motor whose own rotor is fixed to the rotor of the pump and is of the type including magnetic poles, the stator (2) of the electric drive motor and the magnetic bearings (3) being powered from mains (10) via electronic power supply circuits (7, 11) and electronic control circuits (4, 6, 12), the system being characterized in that it further includes an auxiliary power supply circuit (14) whose output is connected to the power supply circuit for said magnetic bearings and whose input receives power, via a switch (15) which closes automatically in the event of a mains failure, from said drive motor, then operating as an alternator.

2. An electrical power supply system for a vacuum pump according to claim 1, characterized in that said electronic power supply circuits and control circuits for the stator (2) of the electric motor driving the pump include a static D.C./A.C. converter (4), said auxiliary power supply (14) having its said input connected to the D.C. side of said converter.

3. An electrical power supply system for a vacuum pump according to claim 1 or 2, characterized in that an emergency battery (13) charged by the power supply circuit (11) for the bearings is connected via an emergency switch (18) to an emergency power input of said power supply circuit, said emergency switch (18) including means (19, 20, 21) for keeping it in an open position so long as mains has not failed or so long as the output voltage from said auxiliary power supply (14) is greater than the voltage of said battery (13).

4. An electrical power supply system for a vacuum pump according to any one of claims 1 to 3, characterized in that it further includes various other modules (24, 25) which are normally powered from mains, and which are powered in the event of a mains failure by said auxiliary power supply circuit.
